# EUROPÄISCHE PATENTANMELDUNG

(11) **EP 0 557 699 A1**
(43) Veröffentlichungstag der Anmeldung: **01.09.1993**
(21) Anmeldenummer: 93100575.5
(22) Anmeldetag: 15.01.1993
(51) Int. Cl.: G06F 13/24

(54) **Verfahren und Einrichtung zur Verifizierung von Interruptsignalen in Mikroprozessorsystemen**

(30) Priorität: 29.01.1992 DE 4202441
(71) Anmelder: SIEMENS AKTIENGESELLSCHAFT, D-80333 München (DE)
(72) Erfinder: Weissbach, Bernhard, Dr., O-9262 Frankenberg (DE)

(57) **Zusammenfassung**

Mikroprozessorsysteme, an die Peripheriegeräte angeschlossen sind, erhalten Fehlermeldungen der Peripheriegeräte über Interrupt- bzw. Diagnosesignalleitungen. Dabei können Interrupt-Falschmeldungen entstehen, wenn umweltbedingte Störungen eine kurzzeitige Änderung des Signalpegels auf den Leitungen bewirken. Diese Störungen werden dadurch erkannt, daß in einer bestimmten Zeitspanne nach dem Auftreten eines Interruptsignals der Signalzustand der Interruptsignalleitung nochmals abgefragt wird. Entspricht der Signalzustand nach dieser Zeitspanne noch immer dem Signalzustand einer Interruptmeldung, so wird eine Fehlerbehebungsroutine eingeleitet.

## Beschreibung

Zur Diagnose der Hardware von Mikroprozessorsystemen und daran angeschlossenen Peripherieeinheiten sind im allgemeinen Hilfsschaltungen erforderlich. Mittels dieser Hilfsschaltungen wird der Normalfunktionszustand der für die Funktion der jeweiligen Hardware bzw. des angeschlossenen Gerätes oder der Baugruppe verantwortlichen Schaltung überwacht. Bei Abweichungen vom Normalfunktionszustand wird durch die Hilfsschaltung ein Signal ausgelöst, das von einer nachgeschalteten Logik ausgewertet wird. Wenn die der Hilfsschaltung nachgeschaltete Auswertelogik auf der Basis eines Mikroprozessors arbeitet, wird, insbesondere bei statisch andauernden Fehlfunktionen, wie beispielsweise einem Kurzschluß, nach herkömmlichen Verfahren eine Auswertung des Fehlersignals entweder durch Auslösen einer Pollingroutine oder durch eine Interruptauslösung durchgeführt.

Diese Verfahren sind beispielsweise in Jugel, "Mikroprozessorsysteme", VEB-Verlag Technik Berlin 1980, Seiten 165 bis 171 beschrieben. Bei der Pollingmethode werden zu bestimmten Zeitpunkten, die durch Systemereignisse festgelegt sind (z.B. bestimmte Fixpunkte im Ablaufsystem des Mikroprozessors oder Zeitereignisse), in der Regel alle von den im System vorhandenen Diagnosehilfsschaltungen kommenden Signale auf ihren Zustand hin abgefragt. Abhängig von den abgefragten Signalzuständen kann mittels der Pollingroutine entschieden werden, ob ein Fehler vorliegt oder nicht. Auch ist denkbar, daß durch die Pollingroutine zunächst erst die Diagnosehilfsschaltung aktiviert wird, wodurch die Diagnoseausführung veranlaßt wird und in einem zweiten Schritt das Diagnoseergebnis abgefragt wird.

Bei der Interruptmethode wird im Gegensatz dazu die Reaktion auf einen Fehler durch die Signaländerung des von einer Diagnosehilfsschaltung kommenden Signals eingeleitet, indem dem Mikroprozessor die Startadresse eines Interruptprogramms mitgeteilt wird.

Beide Methoden sind jedoch für sich anfällig gegenüber Störungen, die durch die Umwelt auf eine die Interruptmeldung übertragende Signalleitung (im folgenden Diagnosesignalleitung) übertragen werden können. Insbesondere bei der Interruptmethode führt eine Störung jedesmal zur scheinbaren Erkennung einer Fehlfunktion. Bei der Pollingmethode wird eine eigentliche Störung fälschlich als Fehlfunktion eines Hardwareanteiles oder eines Peripheriegerätes erkannt, wenn die Störung auf einer Diagnosesignalleitung zufällig mit der Polling-Abfrage über diese Leitung zusammentrifft.

Eine Möglichkeit zur Vermeidung von Fehldiagnosen besteht in der Realisierung einschlägiger und bekannter zusätzlicher schaltungstechnischer Maßnahmen zur Ausblendung der Störimpulse. Dies kann jedoch in Abhängigkeit von der elektromagnetischen Umgebung zu hohen schaltungstechnischen Aufwendungen führen.

Es ist deshalb Aufgabe der Erfindung, eine sichere und aufwandsarme Methode zur Unterscheidung von beliebigen Störimpulsen und tatsächlichen Fehlfunktionen anzugeben.

Diese Aufgabe wird durch ein Verfahren zur Erkennung von durch Störfunktionen ausgelösten Interruptsignalen im Mikroprozessorsystem mit folgenden Verfahrensschritten gelöst:
a) der jeweilige Signalzustand einer Diagnosesignalleitung wird in einem Signalzustandsspeicher hinterlegt,
b) bei einer einem Interrupt entsprechenden Signaländerung auf der Diagnosesignalleitung wird ein Interruptprogramm gestartet, das einem Interruptspeicher einen Interruptwert zuordnet,
c) wenn der Inhalt des Signalzustandspeichers und der des Interruptspeichers einen Zustand aufweisen, der einem Interrupt entspricht, wird eine Interruptmeldung erzeugt und der Interruptwert wird gelöscht,
d) der Interruptspeicher wird gelöscht.

Je nach Zeitdauer der zu erwartenden möglicherweise auftretenden Störfunktionen kann eine Störfunktion noch zuverlässig detektiert werden, wenn nach einer vorteilhaften Ausbildung des Verfahrens bei Vorliegen eines Interruptwertes im Interruptspeicher die Abfrage des Signalzustandspeichers in einem vorgebbaren Zeitintervall wiederholt wird, wobei die Fehlermeldung ausgegeben wird, wenn der Inhalt des Signalzustandspeichers am Ende des Zeitintervalls einem Interruptsignalzustand entspricht.

Eine vorteilhafte Schaltungsanordnung zur Ausführung des Verfahrens besteht aus
a) einer Interruptsignaleinrichtung und einem Signalzustandsspeicher, deren Eingänge mit einer Diagnosesignalleitung verbunden sind,
b) Mitteln zur Ausführung einer Interruptroutine, wobei die Interruptroutine durch ein Interruptsignal ausgelöst wird,
c) einem adressierbaren Schreib-Lese-Interruptspeicher, der von der Interruptroutine beschreibbar ist,
d) Mittel zum Vergleich der Inhalte des Signalzustandspeichers und des Interruptsignalspeichers und zur Auslösung eines Fehlerreaktionssignals.

Ein Ausführungsbeispiel der Erfindung wird im folgenden anhand einer Zeichnung näher beschrieben. Dabei zeigen:
- FIG 1: den Signalpegel einer Diagnosesignalleitung bei einer Fehlfunktion,
- FIG 2: den Signalpegel einer Diagnosesignalleitung bei Auftreten einer Störung,
- FIG 3: eine Schaltungsanordnung zur Erkennung von Diagnosesignalzuständen,
- FIG 4: eine Interruptroutine.

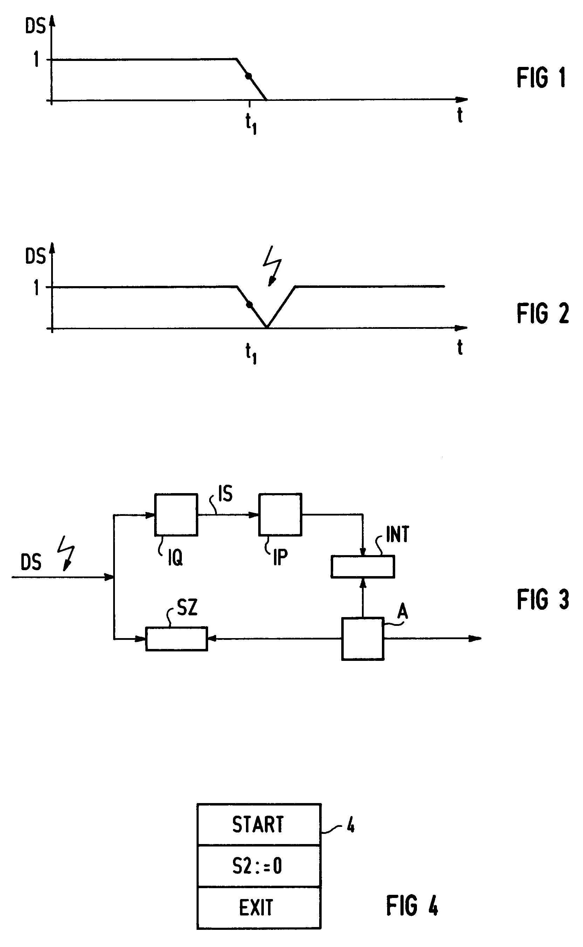

FIG 1 zeigt den Signalzustand einer Diagnosesignalleitung DS beim Auftritt einer Fehlfunktion. Die Diagnosesignalleitung DS komme von einer nicht gezeigten Einrichtung eines Mikroprozessorsystems, beispielsweise von Peripherieeinheiten einer speicherprogrammierbaren Steuerung. Über die Diagnosesignalleitung DS sollen Fehlermeldungen übertragen werden, die in der speicherprogrammierbaren Steuerung in einer Fehlerbehebungsroutine ausgewertet und behandelt werden. Die Diagnosesignalleitung weist im normalen Betriebsfall den Zustand "logisch 1" auf und wechselt im Fehlerfall, d.h. wenn ein tatsächlicher Fehler eines Gerätes vorliegt, auf den Zustand "logisch 0". Dabei wird beim Wechsel vom Zustand "logisch 1" auf den Zustand "logisch 0" in der Interruptauswerteschaltung, auf die weiter unten anhand der FIG 3 noch näher eingegangen wird, ein Interruptsignal ausgelöst.

Wie in FIG 2 zu sehen ist, kann ein Zustandswechsel vom Signal "logisch 1" auf das Signal "logisch 0" auch durch eine beispielsweise umweltbedingte Störung (durch das Blitzsymbol angedeutet) der Diagnosesignalleitung eintreten. Obwohl die Dauer solcher Störungen in der Regel nur einige Mikrosekunden beträgt, löst die auftretende abfallende Flanke trotzdem ein Interruptsignal aus und bewirkt damit im Falle der Interruptmethode, daß die Interruptroutine unnötigerweise gestartet wird. Im Falle der Pollingmethode könnte zufällig gerade im Moment des Auftretens einer Störung eine Signalabfrage erfolgen und damit fälschlicherweise auf einen Fehlerfall geschlossen werden.

FIG 3 zeigt eine Schaltungsanordnung, mit der ein Verfahren zur Erkennung einer kurzzeitigen Störung auf einer Diagnosesignalleitung DS durchführbar ist. Die Diagnosesignalleitung DS ist an jeweils einem Eingang einer Interruptquelle IQ und eines Signalzustandsspeichers SZ angeschlossen. Die Interruptquelle IQ ist über eine Interruptsignalleitung IS mit einer Interruptprogrammeinrichtung IP verbunden. Über das Interruptprogramm IP läßt sich ein Interruptspeicher INT beschreiben. Eine Auswerteeinheit A hat sowohl auf den Interruptspeicher INT als auch auf den Signalzustandsspeicher SZ Zugriff.

Wenn das Signal auf der Diagnosesignalleitung DS entweder aufgrund einer zufälligen Störung oder aufgrund eines tatsächlichen Fehlerfalles vom Zustand "logisch 1" auf den Zustand "logisch 0" wechselt, dann wird dieser Zustandswechsel von der Interruptquelle IQ erkannt und am Ausgang der Interruptquelle IQ ein für die Erfordernisse des Mikroprozessorsystems definiertes Interruptsignal IS zur Verfügung gestellt. Dieses Interruptsignal IS löst ein Interruptprogramm IP aus. Im Gegensatz zu herkömmlichen Interruptprogrammen, mit denen eine aufwendige Fehlerbehandlung durchgeführt wird, besteht das hier ausgelöste Interruptprogramm IP lediglich darin, daß der Interruptspeicher INT auf einen Interruptwert vorzugsweise auf Null gesetzt wird. Der schematische Programmablauf des Interruptprogramms ist in FIG 4 dargestellt.

Da der Interruptspeicher INT somit bei jeder fallenden Flanke den Interruptwert aufweist, läßt sich noch nicht erkennen, ob die fallende Flanke aufgrund einer Störung oder aufgrund eines Fehlerfalles eines Peripheriegerätes entstanden ist. Deshalb wird die Auswerteeinheit A, wenn sie aufgrund eines bestimmten Ereignisses oder auch zyklisch den Interruptspeicher INT ausliest und feststellt, daß dieser den Wert Null aufweist, unmittelbar darauf den Signalzustandspeicher SZ abfragen.

Der Signalzustandspeicher SZ kann beispielsweise als Monoflop realisiert sein. Sein Inhalt weist immer den aktuellen Zustand der Diagnosesignalleitung DS auf. Im Störfall wird der Inhalt des Signalzustandspeichers nur für die Zeitdauer der Störung den Zustand "logisch 0" aufweisen und dann wieder auf den Zustand logisch 1 zurückkehren. Die Auswerteeinheit A muß also, nachdem sie den Wert Null im Interruptspeicher INT detektiert hat, den Signalzustandspeicher in einem bestimmten Zeitintervall, das dem Zeitintervall der Störung entspricht, abfragen. Die Dauer einer Störung und damit das Zeitintervall kann dabei nach Erfahrungswerten festgelegt sein. Weist der Signalzustandsspeicher am Ende des Zeitintervalls wieder den Wert "logisch 1" auf, so lag eine umweltbedingte Störung auf der Diagnosesignalleitung DS vor, und es brauchen keine weiteren Maßnahmen ergriffen werden. Wenn jedoch am Ende der Zeitdauer der Wert des Signalzustandspeichers SZ immer noch den Wert "logisch 0" aufweist, so liegt eine Fehlermeldung über die Diagnosesignalleitung DS vor und die Auswerteeinheit A wird eine Fehlermeldung abgeben bzw. eine Fehlerreaktionsroutine einleiten.

Es ist ratsam, den Interruptspeicher INT sobald wie möglich wieder auf den Wert "logisch 1" zu setzen, damit eine möglicherweise unmittelbar nach der vorhergehenden fallenden Flanke folgende fallende Flanke sofort wieder detektiert werden kann.

Falls eine Fehlermeldung oder eine Störfunktion vorliegt, so kann dies von der Auswertungseinheit über eine beliebige Ausgabeeinrichtung, beispielsweise ein Betriebsdatenerfassungsgerät, gemeldet werden.

## Patentansprüche

1. Verfahren zur Verifizierung von Interruptsignalen in Mikroprozessorsystemen mit folgenden Verfahrensschritten:
a) der jeweilige Signalzustand einer Diagnosesignalleitung (DS) wird in einem Signalzustandspeicher (SZ) hinterlegt,
b) bei einer, einem Interrupt entsprechenden Signaländerung auf der Diagnosesignalleitung (DS) wird ein Interrupt-Programm gestartet, das einem Interruptspeicher (INT) einen Interruptwert zuordnet,
c) wenn der Inhalt des Signalzustandsspeichers (SZ) und des Interruptspeichers (INT) einen Zustand aufweisen, der einem Interrupt entspricht, wird eine Interruptmeldung erzeugt und der Interruptwert wird gelöscht,
d) der Interruptspeicher wird gelöscht.

2. Verfahren nach Anspruch 1, wobei die Abfrage des Signalzustandspeichers (SZ) in einem vorgebbaren Zeitintervall wiederholt wird, wenn der Interruptspeicher (INT) den Interruptwert aufweist und wobei die Fehlermeldung ausgegeben wird, wenn der Zustand des Signalzustandsspeichers (SZ) am Ende des Zeitintervalls einem Interruptsignalzustand entspricht.

3. Verfahren nach einem der vorstehenden Ansprüche, wobei eine Fehlermeldung über eine Ausgabevorrichtung angezeigt wird.

4. Verfahren nach Anspruch 1 oder 2, wobei eine Störfunktionsmeldung über eine Ausgabevorrichtung angezeigt wird, wenn eine einem Interrupt entsprechende Signaländerung vorlag und der Inhalt des Signalzustandsspeichers (SZ) einem "Nicht-Interrupt"-Zustand entspricht.

5. Schaltungsanordnung zur Ausführung des Verfahrens nach einem der Ansprüche 1 bis 3 mit
a) einer Interruptsignaleinrichtung (IQ) und einem Signalzustandsspeicher (SZ), deren Eingänge mit einer Diagnosesignalleitung (DS) verbunden sind,
b) Mittel zur Ausführung einer Interruptroutine, wobei die Interruptroutine durch ein Interruptsignal ausgelöst wird,
c) einen adressierbaren Schreib-Lese-Interruptspeicher (INT), der von der Interruptroutine beschreibbar ist,
d) Mittel zum Vergleich der Inhalte des Signalzustandspeichers (SZ) und des Interruptsignalspeichers (INT) und zur Auslösung eines Fehlerreaktionssignals.
